# EUROPEAN PATENT APPLICATION

(11) **EP 1 870 235 A1**
(43) Date of publication of application: **26.12.2007**
(21) Application number: 07252487.9
(22) Date of filing: 19.06.2007
(51) Int. Cl.: B32B 27/08

(54) **Potable water pipe**

(30) Priority: 19.06.2006 GB 0612033
(71) Applicant: GLYNWED PIPE SYSTEMS LIMITED, Norton Canes Cannock Staffordshire WS11 3NS (GB)
(72) Inventor: Hill, David John, St Neots, Cambridgeshire PE19 5UA (GB); Wilson, Keith Andrew, Rushden, Northamptonshire NN10 9LW (GB)
(74) Representative: Townsend, Victoria Jayne

(57) **Abstract**

A multi-layered pipe (1) comprising an outermost thermoplastic layer (3) and an innermost fluoropolymer layer (5).

## Description

The present invention relates to a pipe for carrying potable water below ground.

Chemical agents are used for sanitising potable water. Potable water is distributed via polyethylene pipes. Chemical sanitising agents which are based on derivates of chlorine, such as chlorine dioxide are powerful as sanitising agents, but at higher dosage levels will attack the polyethylene pipes and/or fittings which join the pipes. Higher doses of sanitising agents, higher ambient temperatures, the storage of water in tanks or deficiencies in the water distribution system increase the likelihood of attack by the chemical agent on the polyethylene pipes and/or fittings. Such conditions are common In regions outside the UK. The attack on the polyethylene may cause premature physical failure of the water pipes and leakage of water.

It is known to use antioxidant additives to prevent oxidation of polyethylene pipes during processing because oxidation reduces the life of the polyethylene. When chemical sanitising agents, such as chlorine dioxide, attack the pipe bore the antioxidant additive is also attacked. This leaves the polyethylene exposed to direct oxidation by the chemical agent.

Fluorination is a known commercial process whereby plastic goods, such as containers, are exposed to fluorine gas or a mixture of fluorine and nitrogen to create a resistant fluoropolymer product.

Solid fluoropolymer pipes have disadvantages for use in water supply applications because the fluoropolymer is not as flexible as existing materials from which water supply pipes are made, such as polyethylene. A fluoropolymer cannot be easily deformed to allow a pipe to be coiled for storage and installation of the pipes. For example, a fluoropolymer such as polyvinylidene fluoride has a much higher Young's modulus than polyethylene and is much less flexible, being similar to rigid polyvinyl chloride in stiffness. Existing pipe joining techniques have been developed for polyethylene pipes and cannot easily be adapted for joining fluoropolymer pipes. The high cost of fluoropolymers is also prohibitive in pipe manufacture.

The present invention sets out to provide a pipe which alleviates the problems described above by providing a pipe which is resistant to attack by sanitising agents and which is low cost, flexible and easily jointed.

In one aspect, the invention provides a multi-layered pipe comprising an outermost thermoplastic layer and an innermost fluoropolymer layer.

An innermost fluoropolymer layer protects the outermost load-bearing layer from attack by sanitising agents. The protective innermost layer allows for ease of jointing using existing techniques and fittings for joining thermoplastic pipes.

Preferably the outermost layer is polyethylene.

Preferably, the innermost fluoropolymer layer is polyvinylidene fluoride.

Polyvinylidene fluoride (PVDF) has an intrinsic resistance to oxidation by chemicals commonly used in sanitising agents such as chlorine, hypochlorite or chlorine dioxide and requires no antioxidant additives to be added.

Preferably, the innermost fluoropolymer layer provides a physical barrier between a fluid contained by the pipe and the outermost layer.

Preferably, the innermost fluoropolymer layer is between 0.01 and 1 mm thickness.

Preferably, for a pipe of thickness of 2.5mm the thickness of the innermost fluoropolymer layer is 0.1 to 0.5 mm.

A thin layer of fluoropolymer has reduced impact on the physical properties, cost and joining of pipes. A thin layer of polyvinylidene fluoride does not limit the flexibility of a pipe and allows the pipe to be coiled, for example, for storage of the pipe and also for manipulation of the pipe during installation.

In an alternative embodiment the multi-layered pipe comprises at least two thermoplastic layers and at least one fluoropolymer layer wherein a thermoplastic layer is outermost and a fluoropolymer layer is innermost.

In one embodiment the multi-layered pipe further comprises at least one tie layer to tie a thermoplastic layer to a fluoropolymer layer.

Use of a tie layer overcomes the difficulty of bonding a thermoplastic layer, such as polyethylene to a fluoropolymer layer, such as polyvinyl fluoride because the layers are made of inert materials.

More preferably, the multi-layered pipe further comprises at least two tie layers wherein a first tie layer has an affinity for thermoplastic material, a second tie layer has an affinity for fluoropolymer material and the first and second tie layers have an affinity for each other.

Preferably, the tie layer has a thickness of between 0.05 and 0.3mm.

Preferably, the multi-layered pipe has an outside diameter of between 20mm and 315mm.

In another aspect, the invention provides a thermoplastic pipe coupling or fitting for receiving an end of a multi-layered pipe wherein the coupling or fitting comprises at least an outermost thermoplastic layer and an innermost fluoropolymer layer.

Preferably, the thermoplastic pipe coupling or fitting comprises a lining means for lining an inner surface of the receiving end of the coupling or fitting.

In another aspect, the invention provides a water supply pipeline comprising multi-layered pipes and/or couplings.

In a further aspect, the invention provides a method for manufacturing a multi-layered pipe comprising an outermost layer and an innermost fluoropolymer layer wherein the layers of the pipe are simultaneously extruded.

In a further embodiment, the method for manufacturing a multi-layered pipe comprising an outermost layer and an innermost fluoropolymer layer comprises the steps of:
extruding the outermost layer;
exposing the bore of the outermost layer to fluorine gas or a mixture of fluorine and nitrogen to form the innermost fluoropolymer layer.

Preferably, the multi-layered pipe is extruded through an extrusion tool.

More preferably, the extrusion tool has at least two channels.

Preferably, the extrusion tool is spiral shaped.

The invention will now be described by way of example with reference to the accompanying diagrammatic drawings, in which:-
Figure 1 is a longitudinal cross-sectional view of a pipe constructed in accordance with the present invention; and
Figure 2 is a transverse cross-sectional view of the pipe of Figure 1.

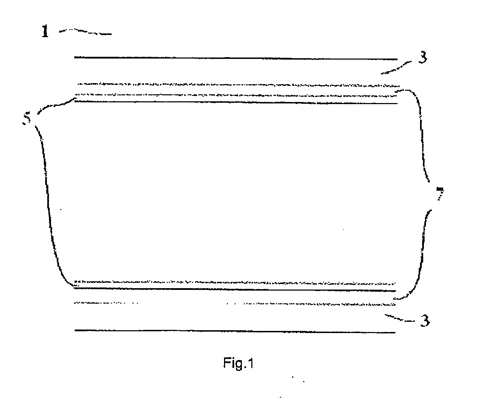

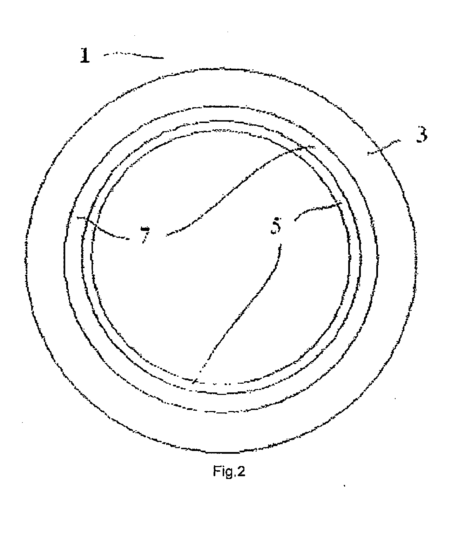

Referring to Figures 1 and 2, the pipe 1 comprises a multi-layered structure. The outermost layer 3 is polyethylene. The innermost layer 5 comprises a thin fluoropolymer layer, for example, a layer of polyvinylidene fluoride (PVDF). Between the outermost layer 3 and the innermost layer 5 there is a tie layer 7.

The multi-layered pipe 1 is extruded from an extrusion tool. The extrusion tool comprises a spiral mandrel tool with multiple separate melt streams. A main melt stream extrudes the outermost polyethylene layer 3 and separate co-extruders extrude the tie layer 7 and the innermost fluoropolymer layer 5. The layers 3, 5, 7 of the multi-layered pipe 1 are extruded simultaneously to form the multiple annular layers of the pipe 1. The extrusion tool is calibrated to control the thickness of the layers 3, 5, 7 and the dimensions of the pipe 1. Following extrusion of the pipe 1 from the tool the pipe 1 is cooled.

In an alternative method, the polyethylene layer 3 is extruded using known extrusion manufacturing techniques and a conventional single layer extrusion tool. The polyethylene layer is then cooled and calibrated. The innermost PVDF layer of the pipe 5 is formed by exposing the bore of the polyethylene layer 3 to fluorine gas or a mixture of fluorine and nitrogen. No intermediate tie layer is required. Under suitable conditions of temperature and pressure, the polyethylene 3 is fluorinated and a thin monomolecular layer of fluoropolymer is formed over the polyethylene layer 5 of the pipe bore.

The pipe 1 has an outside diameter ranging from 20 to 315 mm.

In use, the outermost polyethylene layer 3 bears the mains pressure of the fluid passing through the pipe 1. The fluoropolymer layer 5 is resistant to attack by chemical sanitising agents, such as chlorine dioxide, carried in the fluid passing through the pipe 1. The fluoropolymer layer 5 acts as a physical barrier to protect the polyethylene layer 3 from chemical attack.

The multi-layered pipe 1 is joined to a further pipe/s 1 using existing techniques. For example, by butt fusion welding or using couplings and/or fittings. The couplings or fittings for use with the multi-layered pipe 1 may include a support liner or sleeve to protect the pipe end.

The above described embodiment has been given by way of example only, and the skilled reader will naturally appreciate that many variations could be made thereto without departing from the scope of the present invention.

## Claims

1. A multi-layered pipe (1) comprising an outermost thermoplastic layer (3) and an innermost fluoropolymer layer (5).

2. A multi-layered pipe (1) according to claim 2 wherein the outermost layer (3) is polyethylene.

3. A multi-layered pipe (1) according to any preceding claim wherein the innermost fluoropolymer layer (5) is polyvinylidene fluoride.

4. A multi-layered pipe (1) according to any preceding claim wherein the innermost fluoropolymer layer (5) provides a physical barrier between a fluid contained by the pipe and the outermost layer (3).

5. A multi-layered pipe (1) according to any preceding claim wherein the innermost fluoropolymer layer (5) is between 0.01mm and 1 mm thickness

6. A multi-layered pipe (1) according to any preceding claim of 2.5mm thickness wherein the thickness of the innermost fluoropolymer layer (5) is between 0.1mm and 0.5 mm.

7. A multi-layered pipe (1) according to any preceding claim wherein the multi-layered pipe (1) comprises two or more thermoplastic layers (3) and at least one fluoropolymer layer (5) wherein a thermoplastic layer (3) is outermost and a fluoropolymer layer (5) is innermost.

8. A multi-layered pipe (1) according to any preceding claim wherein the multi-layered pipe (1) further comprises at least one tie layer (7) to tie a thermoplastic layer (3) to a fluoropolymer layer (5).

9. A multi-layered pipe (1) according to claim 8. wherein the multi-layered pipe (1) comprises at least two tie layers (7) wherein a first tie layer has an affinity for thermoplastic material, a second tie layer has an affinity for fluoropolymer material and the first and second tie layers have an affinity for each other.

10. A multi-layered pipe (1) according to claim 8 or claim 9 wherein the tie layer (7) has a thickness of between 0.05 and 0.3mm.

11. A multi-layered pipe (1) according to any preceding claim wherein the multi-layered pipe has an outside diameter of between 20 and 315mm.

12. A thermoplastic pipe coupling or fitting for receiving an end of a multi-layered pipe (1) according to any previous claim wherein the coupling or fitting comprises an outermost thermoplastic layer and an innermost fluoropolymer layer.

13. A thermoplastic pipe coupling or fitting according to claim 12 wherein the thermoplastic pipe coupling or fitting comprises a lining means for lining an inner surface of the or each receiving end of the coupling or fitting.

14. A pipe coupling as claimed in claim 12 or claim 13 wherein the pipe coupling is selected from; a T-junction, an elbow joint, a 45° elbow joint, a cross piece, a Y-piece or an end piece.

15. A water supply pipe line comprising multi-layered pipes (1) and/or pipe couplings or fittings according to claims 1 to 14.

16. A method for manufacturing a multi-layered pipe (1) comprising an outermost later (3) and an innermost fluoropolymer (5) layer wherein the layers of the pipe are simultaneously extruded.

17. A method for manufacturing a multi-layered pipe (1) comprising an outermost layer (3) and an innermost fluoropolymer layer (5) comprising the steps of:
extruding the outermost layer (3);
exposing the bore of the outermost layer (3) to fluorine gas or a mixture of fluorine and nitrogen to form the innermost fluoropolymer layer (5).

18. The method according to claim 16 or claim 17 wherein the multi-layered pipe is extruded through an extrusion tool.

19. The method according to claim 18 wherein the extrusion tool has at least two channels.

20. The method according to any of claim 18 or claim 19 wherein the extrusion tool is spiral shaped.
